**Europäisches Patentamt**

**European Patent Office**

**Office européen des brevets**

(19)

(11) Veröffentlichungsnummer : **0 428 536 B1**

(12) # EUROPÄISCHE PATENTSCHRIFT

(45) Veröffentlichungstag der Patentschrift :
**02.12.92 Patentblatt 92/49**

(51) Int. Cl.$^5$ : **G01B 7/00**

(21) Anmeldenummer : **89907659.0**

(22) Anmeldetag : **11.07.89**

(86) Internationale Anmeldenummer :
**PCT/DE89/00458**

(87) Internationale Veröffentlichungsnummer :
**WO 90/01140 08.02.90 Gazette 90/04**

(54) **MESSEINRICHTUNG ZUR BERÜHRUNGSLOSEN BESTIMMUNG EINER WEG- UND/ODER WINKELÄNDERUNG.**

(30) Priorität : **20.07.88 DE 3824534**

(43) Veröffentlichungstag der Anmeldung :
**29.05.91 Patentblatt 91/22**

(45) Bekanntmachung des Hinweises auf die
Patenterteilung :
**02.12.92 Patentblatt 92/49**

(84) Benannte Vertragsstaaten :
**DE FR GB IT SE**

(56) Entgegenhaltungen :
**DE-A- 3 131 521**
**DE-A- 3 514 154**

(56) Entgegenhaltungen :
**DE-A- 3 525 199**
**DE-A- 3 637 529**
**DE-A- 3 642 678**
**US-A- 3 786 459**
**US-A- 3 961 318**

(73) Patentinhaber : **ROBERT BOSCH GMBH**
**Postfach 30 02 20**
**W-7000 Stuttgart 30 (DE)**

(72) Erfinder : **DOBLER, Klaus**
**Bettäckerstr. 12**
**W-7016 Gerlingen (DE)**
Erfinder : **HACHTEL, Hansjörg**
**Buchenstr. 4**
**W-7251 Weissach (DE)**

EP 0 428 536 B1

## Beschreibung

Die Erfindung geht aus von einer Meßeinrichtung nach der Gattung der Ansprüche 1 und 2. Bei bekannten Meßeinrichtung sind zwei identische Spulen spiegelsymmetrisch auf einem Körper aufgebracht. Eine Scheibe ist parallel zu diesem Körper angeordnet und mit einem Bauteil verbunden, dessen Drehbewegung gemessen werden soll. In Ausgangsstellung überdeckt die elektrisch leitende Oberfläche der Scheibe beide Wicklungen jeweils zur Hälfte, so daß sich in beiden Spulen dieselben Beträge der Spulenspannungen ausbilden können. Der Meßbereich mit höchster Genauigkeit und geringstem Driften liegt im Bereich kleiner Winkel in der Nähe der Ausgangsstellung. Der Meßbereich selber ist aber relativ stark eingeschränkt. Es ist nur ein relativ kleiner symmetrischer Meßbereich zum Nullpunkt möglich.

In der DE-A 36 42 678 wird eine Meßeinrichtung zur Bestimmung des Drehwinkels beschrieben, bei der zu beiden Seiten einer Scheibe jeweils mindestens eine Spule angeordnet ist. Die Spulen sind jeweils in Reihe miteinander in einer elektrischen Ausschalteschaltung miteinander verschaltet. Auf den beiden Stirnseiten der Scheiben befinden sich Schichten aus elektrisch gut leitendem Material, die während des Meßvorganges relativ zu den Spulen bewegt werden. Die Meßeinrichtung kann sowohl nach dem Wirbelstrommeßprinzip als auch nach dem induktiven Verfahren arbeiten. Durch die Anordnung der elektrisch leitenden Schicht zwischen mindestens zwei Spulen ist eine Kompensation von Meßfehlern möglich. Durch eine möglichst große Anzahl von Meßstellen kann durch eine Mittelwertbildung die Fehlerkompensation noch zusätzlich verfeinert werden.

## Vorteile der Erfindung

Die erfindungsgemäße Meßeinrichtung mit den kennzeichnenden Merkmalen der Ansprüche 1 und 2 hat demgegenüber den Vorteil, daß der Meßpunkt mit der höchsten Meßgenauigkeit und dem geringsten Driften wahlweise innerhalb eines relativ großen Bereichs festgelegt werden kann. Insbesondere liegen bei einem großen linearen Meßbereich der Meßbereich mit größter Meßgenauigkeit bei kleinen Winkeln und der Meßbereich mit relativ großem Toleranzbereich bei großen Meßwinkeln. Ferner werden durch Umwelteinflüsse oder Axial- bzw. Radialspiel hervorgerufene Meßfehler an der gewünschten Meßbereichsstelle nahezu vollständig eliminiert. Die Meßeinrichtung baut besonders einfach und kann relativ leicht den gewünschten Anwendungsfällen angepaßt werden. Es ist möglich, an einer gewünschten Meßbereichsstelle nahezu sämtliche Fehler, wie z.B. Schwankungen der Trägerspannung und/oder der Trägerfrequenz, Änderung der Spulengüte durch Erhöhung der. Umgebungstemperatur etc., zu eliminieren.

Durch die in den abhängigen Ansprüchen aufgeführten Maßnahmen sind vorteilhafte Weiterbildungen der in den Ansprüchen 1 und 2 angegebeden Mebeinrichtung möglich.

## Zeichnung

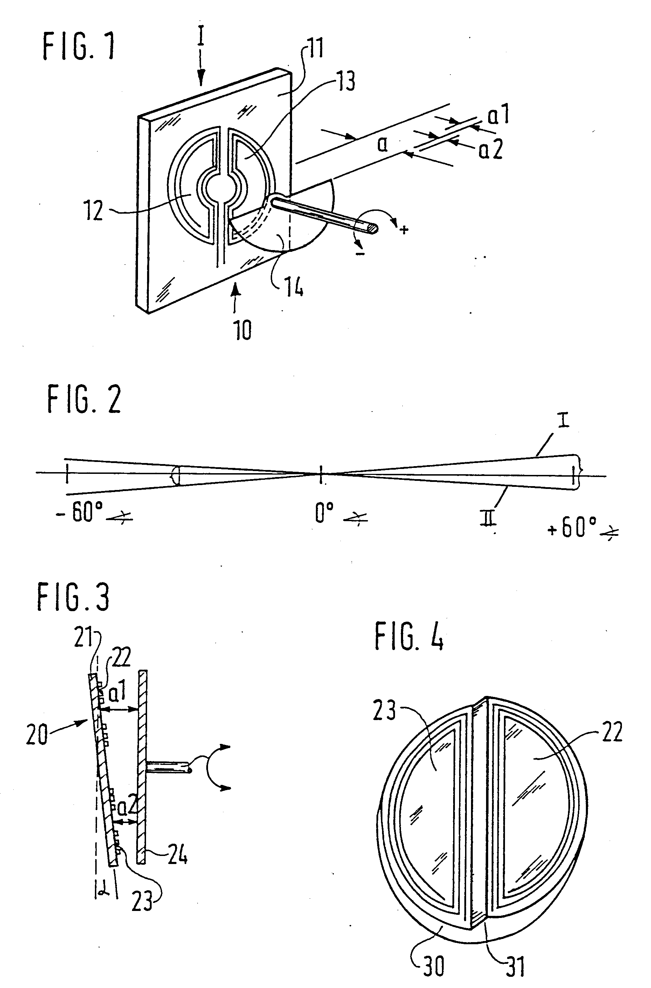

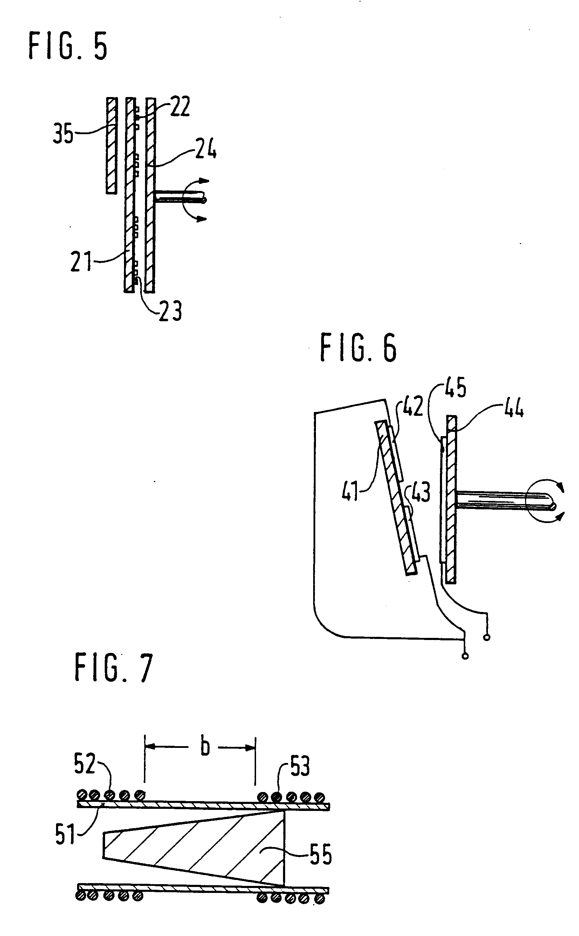

Ausführungsbeispiele der Erfindung sind in der Zeichnung dargestellt und in der nachfolgenden Beschreibung näher erläutert. Es zeigen Figur 1 eine perspektivische Darstellung einer Meßeinrichtung nach dem Stand der Technik, Figur 2 ein Meßdiagramm, Figuren 3 und 5 je einen Längsschnitt durch eine erfindungsgemäße Meßeinrichtung, Figur 4 eine perspektivische Darstellung einer Abwandlung des Ausführungsbeispiels nach Figur 3, Figur 6 eine Abwandlung der Meßeinrichtung für eine kapazitive Messung und Figur 7 eine Abwandlung zur linearen Wegmessung.

## Beschreibung der Ausführungsbeispiele

In Figur 1 ist mit 10 ein nach dem Stand der Technik bekannter Sensor zur Winkelmessung bezeichnet. Auf einem Träger 11 sind zwei identische Spulen 12, 13 spiegelsymmetrisch befestigt, die in einer Wheatstone'schen Halbbrücke verschaltet sind. In einem Abstand "a" zum Träger 11 ist eine halbkreisförmige Scheibe 14 angeordnet, die mit einem nicht dargestellten Bauteil verbunden ist, dessen Drehbewegung bestimmt werden soll. Die den Spulen zugewandte Oberfläche der Scheibe 14 besteht aus einer elektrisch leitenden und/oder ferromagnetischen Schicht. Der Sensor 10 arbeitet nach dem induktiven oder nach dem Wirbelstrommeßprinzip. In Grundstellung der Scheibe 14 werden von dieser beide Spulen 12, 13 jeweils gleich überdeckt, d.h. in beiden Spulen 12, 13 werden - beim Wirbelstrommeßverfahren - gleich große Wirbelströme ausgebildet. Beim Wirbelstrommeßprinzip werden die Spulen von einem hochfrequenten Wechselstrom durchflossen. Zur Messung wird die Scheibe 14 entsprechend der Bewegung des Bauteils gedreht. An den Spulen 12, 13 entsteht ein magnetisches Wechselfeld, das auf der metallischen Oberfläche der Scheibe 14 Wirbelströme bewirkt. Je größer dabei die vom Magnetfeld durchsetzte Fläche der Scheibe 14 ist, desto mehr Wirbelströme werden erzeugt. Ferner ist die Größe der erzeugten Wirbelströme abhängig vom verwendeten Material der Scheibe 14, insbesondere ihrer Oberfläche, sowie vom Abstand der Spulen 12, 13 zu der Oberfläche der Scheibe 14. Durch die erzeugten Wirbelströme wird der Spulen-Wechselstromwiderstand verringert, was - bei einer entsprechenden elektrischen Verschaltung - eine Verkleinerung der an den Spulen anliegenden Spannungen bewirkt. Bei der Drehbewegung der Scheibe 14 wird jeweils die den jeweiligen Spulen zugeordnete Größe der Oberfläche der Scheibe 14 verändert. Dabei wird z.B. die der einen Spule 12 zugeordnete Oberfläche der Scheibe 14 um denselben Betrag erhöht, wie sie in der anderen Spule 13 verringert wird und umgekehrt. Die Spulen 12, 13 sind dabei so in einer Wheatstone'schen Halbbrücke verschaltet, daß als Meßsignal die Differenz der Beträge der Spannungen der beiden Spulen dient. Dadurch erhält man ein der jeweiligen Drehung der Scheibe 14 nahezu proportionales Meßsignal.

In einem Drehbereich von ungefähr ± 60° in beiden Drehrichtungen zur Ausgangsstellung gesehen, ist der Verlauf der Meßkurve nahezu linear. Durch eine axiale Bewegung der Scheibe 14, z.B. durch Lagerspiel, kann der Abstand "a" zu den Spulen 12, 13 verändert werden, wodurch das Meßsignal verfälscht wird.

In der Figur 2 ist ein Diagramm dargestellt, das die Größe des Meßfehlers über einen Drehwinkel von -60° bis +60° zeigt. Hier ist der durch die Veränderung des Abstands "a" hervorgerufene Meßfehler V über der Größe des Drehwinkels aufgetragen. Die mit I bezeichnete Kurve zeigt den Meßfehler bei einer Abstandsvergrößerung und die mit II bezeichnete Kurve den Meßfehler bei einer Abstandsverringerung. Jeweils im Bereich der großen Drehwinkel, z.B. -60° treten auch die größten Meßfehler auf. Im Bereich der Ausgangsstellung, d.h. im Bereich von 0° bzw. von kleinen Drehwinkeln ist der von Driften oder Toleranzen bedingte Meßfehler am geringsten. Der Meßfehler im Vergleich zu der Größe der Verdrehwinkel ist tolerierbar. Mißt man, wie beim Stand der Technik, von -60° bis +60°, so würde man zwar einen Meßbereich von ca. 120° erhalten, hätte aber zu Beginn des Meßvorgangs in diesem Fall im Bereich bei -60°, bzw. bei kleinen Verdrehwinkeln auch die größten Meßfehler. Der mittlere Bereich bei ca. 60° würde dann den Bereich mit der höchsten Meßgenauigkeit aufweisen.

In Figur 3 ist eine erfindungsgemäße Meßeinrichtung dargestellt, bei der trotz relativ großem Meßbereich bei kleinen Verdrehwinkeln um die gewünschte Meßbereichsstelle der Bereich höchster Meßgenauigkeit liegt. Der Längsschnitt entspricht einem Blick in Richtung I in Figur 1. Der Sensor 20 besteht ebenfalls aus einem Träger 21, auf dessen Halbflächen zwei weitgehend identische Spulen 22, 23 spiegelsymmetrisch aufgebracht sind. Der Träger 21 aus elektrisch nicht leitendem Material ist unter einem Winkel α geneigt zur Scheibe 24 angeordnet. Die Scheibe 24 besteht wieder beim Wirbelstrom-Meßprinzip aus elektrisch leitendem Material.

Durch die Schrägstellung des Trägers 21 wird bewirkt, daß diejenige Stelle des Meßbereichs, an dem die größte Meßgenauigkeit vorhanden ist, von der Mittellage (0°) verschoben wird. Beim Sensor 10 nach dem Stand der Technik wird versucht, die geometrischen Symmetrieverhältnisse, d.h. die parallele Anordnung der Spulen 12, 13 zur Scheibe 14 und die elektrischen Symmetrieverhältnisse, so aneinander anzugleichen, daß in beiden Spulen 12, 13 bei jeweils hälftiger Überdeckung durch die Scheibe 14 ein gleich großer Betrag der Spannung anliegt. Im Gegensatz dazu weichen die beiden obigen Symmetrieverhältnisse beim erfindungsgemäßen Sensor 20 voneinander ab. Durch die Schrägstellung des Trägers 21 wird bewirkt, daß der gemittelte Abstand zwischen der Spule 22 und der Scheibe 24 vom gemittelten Abstand zwischen der Spule 23 und der Scheibe 24 abweicht. Durch die unterschiedlichen Abstände $a_1$ und $a_2$ der Spulen 22 bzw. 23 zur Scheibe 24 wird in den beiden Spulen jeweils eine unterschiedliche Größe an Wirbelströmen erzeugt. Die durch den größeren Abstand $a_1$ zwischen der Spule 22 und der Scheibe 24 bewirkte geringere Wirbelstromausbildung auf der Scheibe 24 muß durch eine größere Überdekkungsfläche der Spule von der Scheibe ausgeglichen werden. Dadurch ergibt sich, daß im jetzt vorliegenden Meßbereich an einer Meßbereichsstelle, beispielsweise bei -20° der Bereich höchster Meßgenauigkeit liegt. Die Lage der Stelle mit der höchsten Meßgenauigkeit hängt von der Größe des Neigungswinkels α des Trägers 21 ab. Ferner ist in dem höchsten Genaugkeitsbereich die an der Wheatstone'schen Halbbrückenschaltung abgegriffene Meßspannung Null. An dieser Meßbereichsstelle werden die durch Umwelteinflüsse hervorgerufenen Fehler, z.B. Änderung der Spulengüte durch Änderung der Umgebungstemperatur usw., sowie durch mechanisches axiales Lagerspiel verursachte Fehler eliminiert.

Selbstverständlich ist es auch möglich, statt des Trägers 21 die Scheibe 24 in Schrägstellung anzuordnen, so daß der Träger 21 senkrecht steht und die Scheibe unter einem Winkel zu ihm angeordnet ist.

In der Figur 4 ist eine bewandlung des Ausführungsbeispiels nach Figur 3 dargestellt. Um eine unterschiedlich große Ausbildung von Wirbelströmen durch die beiden Spulen zu erreichen, bei gleicher Überdeckungsfläche durch die Scheibe 24,ist eine der Spulen 22 auf einer Erhöhung 31 des Trägers 30 angeordnet. Dadurch wird wieder ein unterschiedlicher bestand zwischen den Spulen 22, 23 und der Scheibe 24 bewirkt.

Beim Sensor nach Figur 5 kann die parallele Anordnung des Trägers 21 der Spulen 22, 23 zur Scheibe 24 beibehalten werden. Um unterschiedliche Wirbelstromausbildung der beiden Spulen 22, 23 auf der Meßscheibe zu erreichen, ist im Bereich einer Spule 22 auf der der Scheibe 24 abgewandten Seite des Trägers 21 ein Material aus elektrisch leitendem Werkstoff angeordnet. Dadurch wird bewirkt, daß die in der Spule 22 erzeugten Wirbelströme von der in der anderen Spule 23 abweichen, obwohl jeweils zwischen Spulenoberfläche und Scheibe 24 derselbe bestand herrscht. Die Spulen sind dabei jeweils hälf-

tig von der Scheibe 24 überdeckt.

Um eine Verschiebung der Stelle der höchsten Genauigkeit innerhalb des Meßbereichs zu erreichen, ist es erfindungsgemäß notwendig, die beiden Spulen unterschiedlich zu dämpfen, d.h. eine unterschiedliche Wirbelstromerzeugung in den beiden Spulen in mechanischer Symmetrielage hervorzurufen. Ergänzend zu den Abwandlungen nach den Figuren 3 bis 5 können die Spulen jeweils unterschiedliche Spulendurchmesser oder unterschiedliche Spuleninduktivität bzw. Spulengüte aufweisen. Ferner ist es auch möglich, statt mit zwei Spulen mit vier Spulen zu arbeiten, die dann in einer Wheatstone'schen Vollbrücke sinngemäß entsprechend verschaltet sind. Anstelle des beschriebenen Wirbelstromprinzips kann auch das induktive Meßverfahren sinngemäß angewandt werden. hierbei muß lediglich die Scheibe 14 bzw. 24 aus ferromagnetischem Material hergestellt sein.

Auch ist es möglich, den Sensor nach dem kapazitiven Prinzip zu betreiben. Wie in Figur 6 dargestellt, sind auf einen in Schrägstellung angeordneten Träger 41 zwei weitgehend identische, spiegelsymmetrische Flächenbereiche 42, 43 aus metallischem Werkstoff angeordnet. Diese Bereiche 42, 43 stehen mit einer auf einer Scheibe 44 aufgebrachten metallischen Schicht 45 in Wirkverbindung. Die Bereiche 42, 43 bzw. die Schicht 45 bilden die jeweiligen Kondensatorplatten. Während der halbkreisförmigen Drehbewegung der Scheibe 44 wird die Größe der sich überdeckenden Kondensatorplatten 42, 43, 44 verändert und dadurch ein der Drehbewegung proportionales Meßsignal erzeugt.

Die oben beschriebenen Meßverfarahren zur Drehwinkelbestimmung können auch zur linearen Wegmessung abgewandelt werden, wie es in Figur 7 beispielhaft dargestellt ist. Auf einen rohrförmigen Spulenträger 51 sind mit einem Abstand "b" zueinander zwei weitgehend identische Spulen 52, 53 angeordnet. Im Inneren der Spulen wird ein aus elektrisch leitendem und/oder ferromagnetischem Werkstoff bestehender konischer Körper 55 axial und somit relativ zu den Spulen 52, 53 verschoben. Da der Abstand der Oberfläche des Körpers 55 zur ihm jeweils zugeordneten Spule unterschiedlich ist, wird in den Spulen 52, 53 eine verschieden große Wirbelstromausbildung bewirkt. Die Wirkungsweise entspricht aber sonst der oben beschriebenen Drehwinkelbestimmung. In analoger Weise ist die lineare Messung auch beim kapazitivem Prinzip durchführbar.

**Patentansprüche**

1. Meßeinrichtung zur berührungsfreien Bestimmung einer Weg- und/oder Winkeländerung mit Hilfe zweier relativ zueinander bewegter Körper (21, 24), wobei auf einem Körper (21) mindestens zwei Spulen (22, 23) angeordnet sind, die in mindestens einer elektrischen Brückenschaltung verschaltet sind und deren jeweilige Wechselstrom-Widerstandswerte durch die relative Änderung der Größe der den Spulen (22, 23) zugeordneten Bereiche aus elektrisch leitendem und-/oder ferromagnetischem Material des Körpers (24) variiert wird, dadurch gekennzeichnet, daß zur Festlegung der Stelle mit der höchsten Meßgenauigkeit und den geringsten Driftfehlern innerhalb des Meßbereichs der Meßeinrichtung die Spulen (22, 23) unterschiedliche elektrische Meßempfindlichkeit aufweisen.

2. Meßeinrichtung zur berührungsfreien Bestimmung einer Weg- und/oder Winkeländerung mit Hilfe zweier relativ zueinander bewegter Körper (41, 44), wobei auf einem Körper (41) mindestens zwei Kondensatorplatten (42, 43) angeordnet sind, die in mindestens einer elektrischen Brückenschaltung verschaltet sind und deren Kapazität durch die relative Änderung der den Kondensatorplatten (42, 43) zugeordneten zweiten Körper (44) variiert wird, dadurch gekennzeichnet, daß zur Festlegung der Stelle mit der höchsten Meßgenauigkeit und den geringsten Driftfehlern innerhalb des Meßbereichs der Meßeinrichtung die Kondensatorplatten (42, 43) unterschiedliche Meßempfindlichkeit aufweisen.

3. Meßeinrichtung nach Anspruch 1 oder 2, dadurch gekennzeichnet, daß mindestens einer der beiden Körper (21, 24 bzw, 41, 44) unter einem Winkel ($\alpha$) zur Drehachse geneigt ist.

4. Meßeinrichtung nach Anspruch 1 oder 2, dadurch gekennzeichnet, daß der Abstand mindestens einer der beiden Spulen (22, 23) bzw. Kondensatorplatten (42, 43) zum anderen Körper (24 bzw. 44) kleiner ist als der bestand der anderen Spule bzw. Kondensatorplatte.

5. Meßeinrichtung nach Anspruch 1, dadurch gekennzeichnet, daß einer der Spulen (22, 23) ein dritter, elektrisch leitendes Material aufweisender Körper zugeordnet ist.

6. Meßeinrichtung nach Anspruch 1, dadurch gekennzeichnet, daß der erste Körper (51) rohrförmig ausgebildet ist, daß auf dem ersten Körper (51) die Spulen (52, 53) angeordnet sind und daß der zweite konisch verlaufende Körper (55) relativ zum ersten Körper (51) bewegt wird.

**Claims**

1. Measuring device for contactless determination of a displacement change and/or angular change with the aid of two bodies (21, 24) which are moved in relation to one another, at least two coils (22, 23) being arranged on a body (21) and being connected in at least one electrical bridge circuit and their respective alternating current resistance values being varied by the relative change in the size of the regions of electrically conductive and/or ferromagnetic material of the body (24) assigned to the coils (22, 23), characterised in that in order to identify the point with the highest degree of measuring accuracy and the lowest degree of drift errors within the measuring range of the measuring device the coils (22, 23) have different electrical measuring sensitivity.

2. Measuring device for the contactless determination of a displacement change and/or angular change with the aid of two bodies (41, 44) which are moved in relation to one another, at least two capacitor plates (42, 43) being arranged on one body (41) and being connected in at least one electrical bridge circuit and their capacitance being varied by the relative change in the second bodies (44) assigned to the capacitor plates (42, 43), characterised in that in order to identify the point with the highest degree of measuring accuracy and the lowest degree of drift errors within the measuring range of the measuring device the capacitor plates (42, 43) have different measuring sensitivity.

3. Measuring device according to Claim 1 or 2, characterised in that at least one of the two bodies (21, 24 and 41, 44 respectively) is inclined at an angle ($\alpha$) with respect to the axis of rotation.

4. Measuring device according to Claim 1 or 2, characterised in that the spacing between at least one of the two coils (22, 23) or capacitor plates (42, 43) and the other body (24 and 44, respectively) is smaller than the spacing between the other coil or capacitor plate.

5. Measuring device according to Claim 1, characterised in that one of the coils (22, 23) is assigned a third body having electrically conductive material.

6. Measuring device according to Claim 1, characterised in that the first body (51) is of tubular construction, in that the coils (52, 53) are arranged on the first body (51) and in that the second conically extending body (55) is moved in relation to the first body (51).

**Revendications**

1. Installation de mesure pour déterminer sans contact une variation de course et/ou d'angle à l'aide de deux organes (21,24) déplacés l'un par rapport à l'autre, l'un des organes (21) portant deux bobines (22, 23) qui sont au moins branchées dans un montage électrique en pont et dont les réactances respectives sont modifiées par la modification relative de l'importance des zones en matière conductrice d'électricité et/ou ferromagnétique de l'organe (24) associées aux bobines (22, 23), caractérisée en ce que pour fixer le point possédant la plus grande précision de mesure et entacher de l'erreur de dérive la plus faible dans la plage de mesure de l'installation de mesure, les bobines (22, 23) ont une sensibilité électrique différente.

2. Installation pour déterminer sans contact une variation de course et/ou d'angle à l'aide de deux organes (41, 44) déplacés l'un par rapport à l'autre, l'un des organes (41) ayant au moins deux plaques de condensateur (42, 43) qui sont au moins branchées dans un montage de pont électrique et dont la capacité est modifiée par la variation relative du second organe (44) associé aux plaques de condensateur (42, 43), installation caractérisée en ce que pour fixer le point offrant la plus grande précision de mesure et d'erreurs de dérive les plus faibles dans la plage de mesure de l'installation de mesure, les plaques de condensateur (42, 43) ont une sensibilité de mesure différente.

3. Installation de mesure selon les revendications 1 et 2, caractérisée en ce qu'au moins l'un des deux organes (21, 24 ou 41, 44) est incliné d'un angle $\alpha$ par rapport à l'axe de rotation.

4. Installation de mesure selon les revendication 1 et 2, caractérisée en ce que la distance d'au moins l'une des deux bobines (22, 23) ou des plaques de condensateur (42, 43) par rapport à l'autre organe (24, 44) est inférieure à la distance de l'autre bobine ou de l'autre plaque de condensateur.

5. Installation de mesure selon la revendication 1, caractérisée en ce qu'à l'une des bobines (22, 23) est associé un troisième organe en un matériau conducteur d'électricité.

6. Installation de mesure selon la revendication 1, caractérisée en ce que le premier organe (51) est tubulaire et porte les bobines (52, 53) et le second organe (55) de forme conique est déplacé par rapport au premier organe (51).

FIG. 1

FIG. 2

FIG. 3

FIG. 4

FIG. 5

FIG. 6

FIG. 7